# EUROPEAN PATENT SPECIFICATION

(11) **EP 1 884 355 B1**
(45) Date of publication and mention of the grant of the patent: **29.07.2009**
(21) Application number: 07113643.6
(22) Date of filing: 01.08.2007
(51) Int. Cl.: B32B 27/32, B65D 65/00

(54) **EVOH barrier layer for particulate coffee**
EVOH-Sperrschicht für partikelförmigen Kaffee
Couche de barrière d'EVOH pour café particulaire

(30) Priority: 03.08.2006 US 498140
(43) Date of publication of application: 06.02.2008
(60) Divisional application: 09160180.7
(73) Proprietor: KRAFT FOODS HOLDINGS, INC., Northfield, Illinois 60093 (US)
(72) Inventor: Scarola, Leonard S., Basking Ridge, NJ 07920 (US)
(74) Representative: Smaggasgale, Gillian Helen

(56) References cited:
- EP-A- 0 665 102
- DE-A1- 19 536 311
- US-A- 5 346 763

## Description

### BACKGROUND OF THE INVENTION

Containers for roast coffee (herein defined as fresh roast and ground coffee particulates or roasted whole coffee beans) have many unique requirements not considered for other containers. For example, roast coffee gives off gases while being stored, and is deleteriously affected by air. Thus, roast coffee containers must prevent the ingress of air and hence be air-tight; but such containers must also be suitably robust to withstand a build-up of pressure, or alternatively, the container must vent the built up gases before a pressure which causes damage (miss-shape or break) to the container is reached. Roast coffee also has oils thereon which rub off on and can be partially absorbed by the container, which oils are thus unable to contribute to the aroma/flavor of the final coffee to be consumed.

While coffee containers were previously generally made of metal (which was easily made robust, air-tight and impervious to oils), new plastic containers, particularly with layered walls, have now been found to be suitable for containing roast coffee. To prevent the off gases and oils from passing through the plastic container, plastic laminates have been used to form the plastic containers which laminates contain a barrier layer such as EVOH (ethylene vinyl alcohol). EVOH is a suitable barrier layer known in the art especially for gaseous O₂, and is sandwiched between other layers in view of its sensitivity to water. This sandwiching includes the use of a tie layer on either side of the EVOH layer to secure the EVOH layer to the adjacent layers.

### BRIEF SUMMARY OF THE INVENTION

While the prior art plastic containers have been popular and do prevent the escape of off gases and oils therethrough, these plastic containers have been subject to absorbing the off gases and/or oils of the roast coffee contained therein. Such absorptions reduce the flavor and aroma of the brewed coffee, and leave a strong odor on the inside of the container. Therefore, in accordance with the present invention, a container system and in particular a container is provided which significantly reduces the aroma and flavor components absorbed by the roast coffee present in the container. In particular, the container or container system includes a main body having walls made of a laminate of plastics materials. Contained in the main body is a quantity of roast coffee which naturally releases aromatic ingredients such as gases and oils. The laminate includes an outer layer and an inner barrier layer, with the inner layer being in contact with the quantity of roast coffee. The body then has an Aroma Retention Effectiveness (ARE) of the aromatic ingredients of less than about 30%.

The inner barrier layer is EVOH. Preferably, the ARE of the body is less than about 20% and the roast coffee is fresh roast and ground coffee or roasted whole coffee beans.

The outside plastic layer is HDPE having a
thickness of between about 762-1778 µm (30-70 mils); and wherein the EVOH layer has a thickness of between about 7·6-50·8 µm (0.3-2.0 mils). In a preferred embodiment, the body has an overall thickness. Then the outside plastic layer has a thickness of about 96.75% of that of the overall thickness, and the EVOH layer has a thickness of about 1.5% of that of the overall thickness. In addition, there is a tie layer between the outside plastic layer and the EVOH layer which has a thickness of about 1.75% of that of the overall thickness.

Further in a preferred embodiment, the EVOH layer is in close proximity to the roast coffee. In the close contact embodiment, there is provided a thin adherence layer which is in contact with the roast coffee. The thin adherence layer is preferably HDPE of about 25·4 µm (1 mil) thickness, and the outside layer is also HDPE. If desired, the outside layer can be a sandwich of two or more polymer layers, such as HDPE and a regrind resin.

In a method for reducing a loss of coffee aroma ingredients from a roast coffee according to the present invention, there is a step of forming a main body of a container with a main plastic layer which would otherwise absorb some of the coffee aroma ingredients. This forming step includes the step of lining an inside of the main plastic layer with a barrier material layer, so that the barrier material layer is closely adjacent the roast coffee and prevents coffee aroma Ingredients from being absorbed by the main body of the container which is lined thereby. The main body is thus provided with an ARE of less than about 30%. Next, the roast coffee is stored in the main body.

In accordance with the method, the barrier material layer is formed of EVOH and the roast coffee is stored in contact with the EVOH layer. Alternatively, there is the step of providing the barrier material layer with a thin adherence layer.

The structural plastic layer is
formed to have a thickness of between about 762-1778 µm (30-70 mils), the EVOH layer is formed to have a thickness of between about 7.6-50.8 µm (0.3-2.0 mils), and the thin adherence layer is formed to have a thickness of between about 12.7-38.1 µm (0.5-1.5 mils). Preferably, the thin adherence layer is formed of HDPE to have a thickness of about 25.4 µm (1 mil).

Also in a preferred embodiment of the method, the outside plastic layer is formed of HDPE. Alternatively, the outside plastic layer is formed as a sandwich of two or more polymer layers, such as a sandwich of HDPE and a regrind resin.

It is an advantage of the present invention that a container for roast coffee is provided which prevents the off gases and oils from being absorbed thereby so that the roast coffee retains more of its aroma ingredients.

It is also an advantage of the present invention that the containers can be made with only three layers (including a tie layer), which is two less layers than present containers, resulting in lower raw material and capital costs.

Other features and advantages of the present invention are stated in or apparent from detailed descriptions of presently preferred embodiments of the invention as discussed in greater detail below.

### BRIEF DESCRIPTION OF THE SEVERAL VIEWS OF THE DRAWINGS

Figure 1 is a top, right side and rear perspective view of a container system in accordance with the present invention.

Figure 2 is an enlarged cross-sectional view of a portion of a main body wall of the container depicted in figure 1 in accordance with a first embodiment of the present invention.

Figure 3 is a view similar to figure 2 in accordance with a second embodiment of the present invention.

Figure 4 is a view similar to figure 2 in accordance with a third embodiment of the present invention.

Figure 5 is a cross sectional view of a portion of a rim of a main body according to the third embodiment depicted in figure 4.

### DETAILED DESCRIPTION OF THE PREFERRED EMBODIMENTS

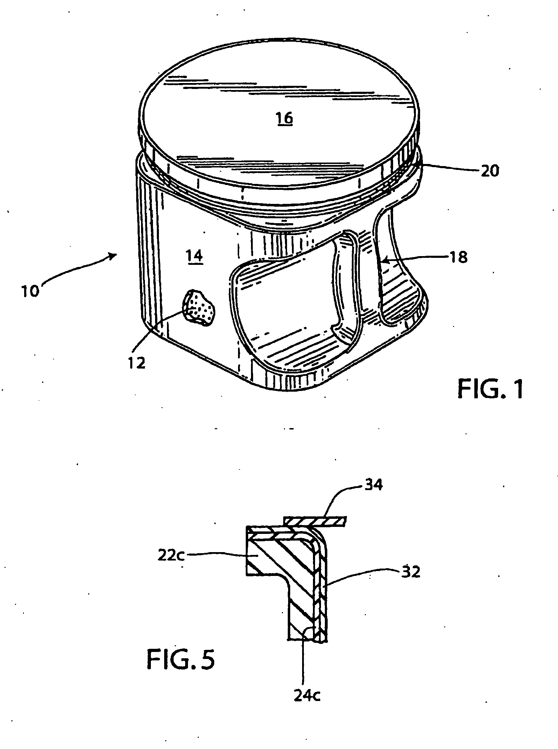

Referring to the drawings, like numerals represent like elements throughout the several views. The present invention is applicable to coffee containers of any shape, such that the actual shape of the container forms no part of the present invention. However, in order to describe the invention, a typical container system 10 is described herein and shown in **figure 1** for containing a quantity of roast coffee 12, which as noted above is defined as roast and ground coffee or roasted whole beans. It will be appreciated that container system 10 as typical in the art includes a main body 14, a replaceable lid 16 for the underlying top opening (not shown) in main body 14, and a peelable foil layer (not shown) which seals the top opening during shipping and before use of roast coffee 12 by the consumer.

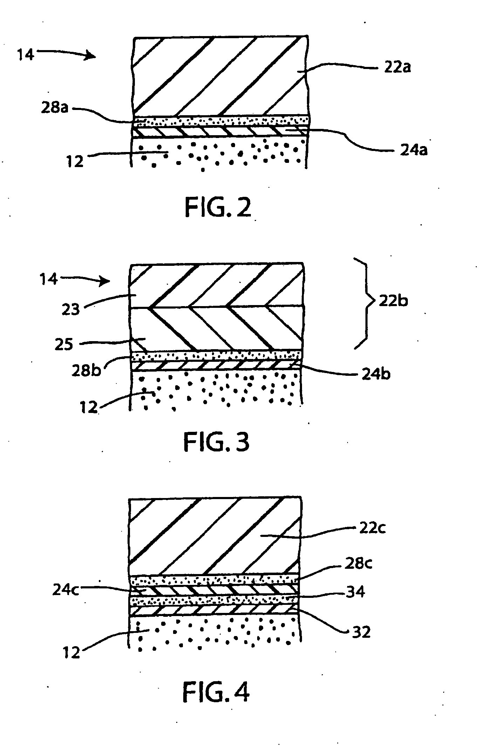

In container system 10, main body 14 includes the four surrounding side walls, a bottom wall, a handle 18 formed in one (rear) side wall, and a top 20 forming a central and circular opening (to which a separate removable lid 16 is removably attached). It will be appreciated that the differently identified parts of main body 14 described above are all integrally formed in a single blow molding operation, with all of main body 14 formed of a laminate wall of plastics materials as shown by the cross section thereof depicted in figures 2-4 depending on the embodiment.

It will also be appreciated that roast coffee 12 naturally releases aromatic off gases and oils after container system 10 is filled with roast coffee 12, so that such aromatic ingredients will come into contact with main body 14 during shipping and storage as well as after container system 10 is opened by the consumer. Such aroma ingredients are beneficial to the taste of the liquid coffee drink produced by the roast coffee, so that reducing as much as possible the loss of such aroma ingredients from the roast coffee is desired . One source of loss of such aroma ingredients in prior art containers was due to absorption by the plastics materials of the main body, as ready evident by the aroma left when the container is emptied.

In order to prevent the absorption, or any substantial absorption of aroma ingredients by main body 14, main body 14 of the present invention is formed as a hollow laminate structure having integral containing walls made of an outer layer 22a and an inner barrier layer 24a as shown in **figure 2**. Outer layer 22a and inner barrier layer 24a are held together by use of a thin tie layer 28a. Outer layer 22a preferably forms the basic structural component of main body 14, and serves to protect roast coffee 12 from the outside environment. Conveniently, outer layer 22a is made of a blow-molded HDPE (high density polyethylene). In order to prevent the aromatic ingredients released from roast coffee 12 from being absorbed by outer layer 22a, inner barrier layer 24a completely lines outer layer 22a as shown in figure 2. Inner barrier layer 24a is made of an EVOH (ethylene vinyl alcohol) copolymer. Tie layer 28a is an adherent or compatibilizer for assuring attachment of inner layer 24a to outer layer 22a, tie layer 28a is conveniently made of TYMOR manufactured by Rohm & Haas or the like.

As known in the art, EVOH serves as a good barrier layer for plastic laminates where O₂ absorption is to be prevented, but it is also known that EVOH is sensitive to water or moisture. For that reason, such EVOH layers have been used in many containers including those for roast coffee, but only in the middle of such plastic laminates due to the sensitivity of EVOH to moisture. However, in accordance with the present invention, an EVOH layer has also been found to provide against absorption of aromatic ingredients, including both off gases and oils. Thus, in accordance with the embodiment of the present invention depicted in figure 2, EVOH is used as a primary inner layer 24a which is contact with roast coffee 12. The EVOH inner layer 24a thus assures that there is little or no absorption of the aroma ingredients taking place in any part of main body 14, and hence the retention by roast coffee 12 of the aroma ingredients is promoted. At this location where roast coffee 12 is being stored, it will be appreciated that there is no problem with moisture or water.

As outer layer 22a forms the structural component of main body 14, outer layer 22a has a thickness of between about 762-1778 µm (30-70 mils) in accordance with the preferred embodiment. Preferably, outer layer 22a is HDPE and comprises about 96.75% of the thickness; and is in the preferred range of 1016-1524 µm (40-60 mils) and is most preferably about 1270 µm (50 mils). Outer layer 24a is followed by tie layer 28a which comprises about 1.75% of the thickness. Finally, the inner layer 24a is EVOH which comprises about 1.5% of the thickness. Thus, the preferred container 14 can have an overall wall thickness as desired but within about the above noted ranges.

In an alternative embodiment depicted in **figure 3**, an outer layer 22b is provided which consists of an outermost virgin HDPE layer 23 and a regrind layer 25 formed from a regrind resin which bind to one another. Inner barrier EVOH layer 24b is adhesively adhered to regrind layer 25 by a tie layer 28b. As inner barrier layer 24b is only concerned with acting as a barrier, the thickness of EVOH inner layer 24b is thinner than that of outer layer 22b and is between about 7.6-50.8 µm (0.3 and 2.0 mils). In one preferred embodiment, the thickness of outer layer 22b is about 1226 µm (48.25 mils) and that of inner barrier layer 24b is 19 µm (0.75 mils).

In another alternative preferred embodiment depicted in **figures 4** **and** **5**, inner barrier layer 24c is immediately adjacent roast coffee 12, but a thin adherence layer 32 is now provided on inner barrier layer 24c so that roast coffee 12 does not actually directly contact inner barrier layer 24c. Adherence layer 32 is preferably a thin polymer layer of a suitable copolymer such as HDPE, LDPE, or polypropylene. Adherence layer 32 is attached to inner barrier layer 24c by a tie layer 34; and likewise inner barrier layer 24c is attached to outer layer 22c by a tie layer 28c (not shown for convenience in figure 5). Adherence layer 32 is used to provide heat sealability for attachment of a (conventional) foil membrane 34 thereto, which foil seal member seals an open top of main body 14.

It will be appreciated that adherence layer 32 is only needed where the open top to which the foil membrane is to be attached is formed by an out-turned upper rim or flange 36 of main body 14 as depicted in figure 5. Without adherence layer 32, inner barrier layer 24c would be upper/outermost at this rim or flange, and inner barrier layer 24c is typically not suitable for attaching the foil membrane thereto. A thickness of thin adherence layer 32 would be between about 12.7-38.1 µm (0.5 to 1.5 mils), and preferably about 25.4 µm (1 mil) or about 3% of the total thickness of main body 14. While some small amount of aroma ingredients might be absorbed by thin adherence layer 32, such would be negligible due to the thinness of adherence layer 32; so that inner barrier layer 24c would still be in close proximity to roast coffee 12 and still serve to prevent the passage of aroma ingredients therethrough and hence into the majority of the laminate wall material of main body 14, namely outer (structural) layer 22c.

An example of the benefit of using an EVOH inner layer is described below. Two sets of round test bottles were prepared. These bottles weighed about 18 grams, were about 584 µm (23 mils) thick, and had a volume of about 400 ml. One set of bottles was made of HDPE having a density of 0.950 grams/cc, and the other set was made of HDPE having the same density of 0.950 grams/cc but additionally with an inner layer of EVOH which was about 3% of the wall thickness. Bottles of each type were flushed with N₂ to mimic actual packaging conditions and then filled with fresh ORIGINAL MAXWELL HOUSE blend roast and ground coffee. Each bottle was sealed with a screw cap and parafilm, and placed in a constant 40°C oven, The bottles were tested after one week of storage by standard GC/MS procedures to determine the absorbed amounts of a standard profile of coffee aromas. The results are shown below:

| Aroma Compound | Absorption of HDPE (in ng/g) | Adsorption of HDPE/EVOH (in ng/g) | EVOH Effectiveness as Barrier |
|---|---|---|---|
| IBA | 1524.50 | 24.63 | 2% |
| 2 Methyl furan | 1814.13 | 55.04 | 3% |
| 3-Methyl butanal | 1381.28 | 191.03 | 14% |
| 2 Methyl butanal | 2562.42 | 459.78 | 18% |
| 2-Pentanone | 57.08 | 18.63 | 29% |
| 2,3 Pentanedione | 726.67 | 23.01 | 3% |
| 2,5-diemthyl furan | 303.89 | 54.27 | 18% |
| Pyrazine | 231.11 | 35.56 | 15% |
| Pyridine | 1817.30 | 176.71 | 10% |
| 2-methyltethydrofuran-3-one | 49.36 | 1.85 | 4% |
| 2 Methyl Pyrazine | 948.58 | 85.46 | 9% |
| Furfural | 657.30 | 89.25 | 14% |
| Furfuryl alcohol | 756.67 | 656.15 | 87% |
| Acetoxyacetone | 46.85 | 8.06 | 17% |
| 2,6 Dimethyl pyrazine | 1126.78 | 129.31 | 11% |
| 5-methyl furfural | 37.57 | 2.20 | 6% |
| Furfuryl acetate | 254.24 | 19.15 | 8% |
| **TOTAL** | **14295.69** | **2028.04** | **16%** |

From the above testing, it will be appreciated that the bottles with the described EVOH barrier layer absorbed only about 16% as much as the PE layer, which is defined herein as the Aroma Retention Effectiveness (ARE) of the bottle composition. It will thus be appreciated that the present invention is designed to provide an ARE for a container of less than about 30%, and preferably below about 20% such as with the above described test container.

It will also be appreciated that while structural layer 22 has been depicted as a single HDPE layer, structural layer 22 could be formed of two or more layers of plastics materials having purposes in addition to forming the structural body 14. For example, there could be a thinner pigmented layer followed by a natural HDPE layer.

Consistent with the above description of container system 10, it will be appreciated that the present invention also includes a method for reducing the loss of coffee aroma ingredients from a roast coffee. This method begins with the step of forming main body 14 of container unit 10 with a main plastic outer layer such as layer 22a which would otherwise absorb some of the coffee aroma ingredients. This forming step then includes the step of lining an inside of the outer layer with a barrier material layer such as inner barrier layer 24a, so that the barrier material layer is closely adjacent the roast coffee and prevents coffee aroma ingredients from being absorbed by the outer layer which is lined thereby. As noted above, this step can be performed in a blow-molding process, and include a tie layer such as tie layer 28 between the main plastic layer and the inner barrier layer. The main body is thus provided with an ARE of less than about 30%. Finally, the roast coffee is delivered into and stored in the main body.

In this method, the barrier material layer is preferably formed of EVOH and the roast coffee is stored in contact with the EVOH layer. Alternatively, there may be a step of providing the barrier material layer with a thin adherence layer as shown in figure 5. Then, in the forming step of the main body, a flange or rim 36 is formed

In the preferred embodiment of the method, the structural plastic layer is formed to have a thickness of between about 762-1778 µm (30-70 mils), the EVOH layer is formed to have a thickness of between about 7.6-50.8 µm (0.3-2.0 mils), and the thin adherence layer is formed to have a thickness of between about 12.7-38.1 µm (0.5-1.5 mils). Preferably, the thin adherence layer, if present, is formed of HDPE to have a thickness of about 25.4 µm (1 mil).

Also in a preferred embodiment of the method, the outside plastic layer is formed of HDPE. Alternatively, the outside plastic layer is formed as a sandwich of two or more polymer layers, such as a sandwich of HDPE and a regrind resin.

Although the present invention has been described with respect to exemplary embodiments thereof, it will be understood by those of ordinary skill in the art that variations and modifications can be effected within the scope of the invention.

## Claims

1. A container system comprising:
a main body having walls made of a laminate of plastics materials; and
a quantity of roasted coffee contained in said main body which roasted coffee naturally releases aromatic gases and oils;
wherein said laminate includes an outer layer and an attached inner barrier layer which is EVOH, said inner barrier layer being in contact with said quantity of roasted coffee; and
wherein said body has an ARE of less than 30%, wherein said outside plastic layer is HDPE having a thickness of between 762-1778 µm (30-70 mils); and wherein said EVOH layer has a thickness of between 7.6-50.8 µm (0.3-2.0 mils).

2. A container system as claimed in Claim 1, wherein the ARE of said body is less than about 20%.

3. A container system as claimed in Claim 1 or 2, wherein said quantity of roasted coffee is fresh roast and ground coffee.

4. A container which resists aroma absorption comprising:
a roasted coffee product which gives off aroma ingredients;
a laminate wall material which forms a body, said laminate wall material including
a structural plastic layer which structurally forms the container and which serves to initially protect the coffee product from the outside environment, and
a thin barrier layer formed of EVOH which lines said outside plastic layer and which is in close proximity to the roasted coffee product, said EVOH layer being of sufficient thickness to substantially prevent the aroma ingredients from passing thereinto and hence from being absorbed by said structural plastic layer;
such that the aroma ingredients given off by the roasted coffee product are substantially not absorbed by said laminate wall material and instead are encouraged to be retained by the roasted coffee product, said EVOH layer is covered with a thin adherence layer and wherein said structural plastic layer has a thickness of between 762-1778 µm (30-70 mils); wherein said EVOH layer has a thickness of between 7.6-50.8 µm (0.3-2.0 mils), and wherein said thin adherence layer has a thickness of between 12.7-38.1 µm (0.5-1.5 mils).

5. A container as claimed in Claim 4, wherein said thin adherence layer is HDPE which has a thickness of 25·4 µm (1 mil).

6. A container as claimed in Claim 4 or 5, wherein said outside plastic layer is HDPE.

7. A container as claimed in any one of Claims 4 to 6, wherein said outside plastic layer is a sandwich of two or more polymer layers.

8. A container as claimed in Claim 7, wherein said outside plastic layer is a sandwich of HDPE and a regrind resin.

9. A method for reducing a loss of coffee aroma ingredients from a roasted coffee product comprising the steps of:
forming a main body of a container with a main plastic layer which would otherwise absorb some of the coffee aroma ingredients, said forming step including the step of lining an inside of the main plastic layer with a barrier material layer formed of EVOH so that the barrier material layer is closely adjacent the coffee product and substantially prevents coffee aroma ingredients from being absorbed by the main body of the container which is lined thereby and so that the main body has an ARE of less than 30% covering the barrier material layer with a thin adherence layer; and
storing the roasted coffee product in the main body,
wherein the structural plastic layer is formed to have a thickness of between 762-1778 µm (30-70 mils), wherein the EVOH layer is formed to have a thickness of between 7.6-50.8 µm (0.3-2.0 mils), and wherein the thin adherence layer is formed to have a thickness of between 12.7-38.1 µm (0.5-1.5 mils)

10. A method for reducing a loss of coffee aroma ingredients as claimed in Claim 9, wherein the roasted coffee product is stored in contact with the EVOH layer.

11. A method for reducing a loss of coffee aroma ingredients as claimed in Claim 9 or 10, wherein the thin adherence layer is formed of HDPE to have a thickness of 25.4 µm (1 mil).

12. A method for reducing a loss of coffee aroma ingredients as claimed in any one of Claims 9 to 11, wherein the outside plastic layer is formed of HDPE.

13. A method for reducing a loss of coffee aroma ingredients as claimed in any one of Claims 9 to 12, wherein the outside plastic layer is formed as a sandwich of two or more polymer layers.

14. A method for reducing a loss of coffee aroma ingredients as claimed in Claim 13, wherein the outside plastic layer is formed of a sandwich of HDPE and a regrind resin.

## Patentansprüche

1. Behältersystem mit
einem Hauptkörper mit Wandungen, die aus einem Laminat aus Kunststoffmaterial gebildet sind, und
einer Menge von in dem Hauptkärper enthaltenem, geröstetem Kaffee, der natürlicherweise aromatische Gase und Öle freisetzt,
wobei das Laminat eine äußere Schicht und eine damit verbundene innere Sperrschicht hat, die aus EVOH ist und mit der genannten Menge des gerösteten Kaffees in Berührung ist, und
wobei der genannte Körper eine Aromarückhaltewirksamkeit von weniger als 30 % hat, die äußere Kunststoffschicht HDPE in einer Dicke zwischen 762 und 1778 µm (30-70 mil) ist und die EVOH-Schicht eine Dicke zwischen 7,6 und 50,8 µm (0,3-2,0 mil) hat.

2. Behältersystem nach Anspruch 1, bei dem die Aromarückhaltewirksamkeit des genannten Körpers kleiner als etwa 20 % ist.

3. Behältersystem nach Anspruch 1 oder 2, bei dem die Menge des gerösteten Kaffees frischer und gemahlener Röstkaffee ist.

4. Behälter, der einer Aromaabsorption entgegen wirkt, mit
einem geröstet:en Kaffeeprodukt, das Aromabestandteile abgibt,
einem Laminatwandmaterial, das einen Körper bildet, wobei das Laminatwandmaterial umfaßt
eine strukturelle Kunststoffschicht, die den Behälter baulich bildet und dazu dient, das Kaffeeprodukt zunächst vor der äußerten Umgebung zu schützen, und
eine aus EVOH gebildet dünne Sperrschicht, die die äußere Kunststoffschicht bekleidet und in unmittelbarer Nachbarschaft zu dem Röstkaffeeprodukt ist, wobei die EVOH-Schicht eine ausreichende Dicke hat, um im wesentlichen zu verhindern, daß Aromabestandteile in sie einwandern und dann durch die strukturelle Kunststoffschicht absorbiert werden,
so daß die von dem gerösteten Kaffeeprodukt abgegebenen Aromabestandteile durch das Laminatwandmaterial nicht absorbiert werden und stattdessen ihre Bindung an das geröstete Kaffeeprodukt begünstigt wird, die EVOH-Schicht mit einer dünnen Haftschicht bedeckt ist und
wobei die strukturelle Kunststoffschicht eine Dicke zwischen etwa 762 und 1778 µm (30-70 mil) hat, die EVOH-Schicht eine Dicke zwischen 7,6 und 50,8 um (0,3-2,0 mil) hat und die dünne Haftschicht eine Dicke zwischen 12,7 und 38,1 µm (0,5-1,5 mil) hat.

5. Behälter nach Anspruch 4, bei dem die dünne Haftschicht aus HDPE ist und eine Dicke von 25,4 µm (1 mil) hat.

6. Behälter nach Anspruch 4 oder 5, bei dem die äußere Kunststoffschicht HUPE ist.

7. Behälter nach einem der Ansprüche 4 bis 6, bei dem die äußere Kunststoffschicht ein Schichtkörper aus zwei oder mehr Polymerschichten ist.

8. Behälter nach Anspruch 7, bei dem die äußere Kunststoffschicht ein Schichtkörper aus HUPE und einem aufgemahlenem Harz ist.

9. Verfahren zur Verringerung eines Verlustes an Kaffeearomabestandteilen aus einem Röstkaffeeprodukt, bei dem man
einen Hauptkörper eines Behälters mit einer Hauptkunststoffschicht bildet, die an sich etwas von den Kaffeearomabestandteilen absorbieren würde, wobei die Bildungsstufe die Stufe der Bekleidung der Innenseite der Hauptkunststoffschicht mit einer aus EVOH gebildeten Sperrmaterialschicht umfaßt, so daß die Sperrmaterialschicht dicht an dem Kaffeeprodukt ist und im wesentlichen verhindert, daß Kaffeearomabestandteile durch den so bekleideten Hauptkörper des Behälters absorbiert werden, und der Hauptkörper eine Aromarückhaltewirksamkeit von weniger als 30 % hat, die Sperrmaterialschicht mit einer Haftschicht bedeckt, und
das geröstete Kaffeeprodukt in dem Hauptkörper aufbewahrt,
wobei die strukturelle Kunststoffschicht in einer Dicke zwischen 762 und 1778 µm (30-70 mil) gebildet ist, die EVOH-Schicht in einer Dicke zwischen 7,6 und 50,8 µm (0,3-2,0 mil) gebildet ist und die dünne Haftschicht in einer Dicke zwischen 12,7 und 38,1 µm (0,5-1,5 mil) gebildet ist.

10. Verfahren zur Verringerung eines Verlustes an Kaffeearomabestandteilen nach Ansprüch 9, bei dem das geröstete Kaffeeprodukt in Berührung mit der EVOH-Schicht aufbewahrt wird.

11. Verfahren zur Verringerung eines Verlustes an Kaffeearomabestandteilen nach Anspruch 9 oder 10, bei dem die dünne Haftschicht aus HDPE in einer Dicke von 25,4 µm (1 mil) gebildet ist.

12. Verfahren zur Verringerung eines Verlustes an Kaffeearomabestandteilen nach einem der Ansprüche 9 bis 11, bei dem die äußere Kunststoffschicht aus HDPE gebildet ist.

13. Verfahren zur Verringerung eines Verlustes an Kaffeearomabestandteilen nach einem der Ansprüche 9 bis 12, bei dem die äußere Kunststoffschicht als ein Schichtkörper aus zwei oder mehr Polymerschichten gebildet ist.

14. Verfahren zur Verringerung eines Verlustes an Kaffeearomabestandteilen nach Anspruch 13, bei dem die äußere Kunststoffschicht aus einem Schichtkörper aus HDPE und einem aufgemahlenem Harz gebildet ist.

## Revendications

1. Système de récipient comprenant:
un corps principal doté de parois réalisées à l'aide d'un stratifié de matières plastiques ; et
une quantité de café torréfié contenu dans ledit corps principal, ledit café torréfié libérant naturellement des gaz et huiles aromatiques ;
dans lequel ledit stratifié comprend une couche extérieure et une couche barrière interne fixée qui est en EVOH, ladite couche barrière interne étant en contact avec ladite quantité de café torréfié ; et
dans lequel ledit corps a une ARE (Efficacité de rétention d'arôme) inférieure à 30 %, dans lequel ladite couche de plastique extérieure est en HDPE ayant une épaisseur comprise entre 762 et 1778 µm (30-70 mils), et dans lequel ladite couche d'EVOH a une épaisseur comprise entre 7,6 et 50,8 µm (0,3 - 2,0 mils).

2. Système de récipient selon la revendication 1, dans lequel l'ARE dudit corps est inférieure à environ 20 %.

3. Système de récipient selon la revendication 1 ou la revendication 2, dans lequel ladite quantité de café torréfié est du café moulu et fraîchement torréfié.

4. Récipient qui résiste l'absorption d'arôme comprenant :
un produit de café torréfié qui libère des ingrédients d'arôme ;
un matériau de paroi laminé qui forme un corps, ledit matériau de paroi laminé comprenant
une couche plastique structurelle qui forme structurellement le récipient et qui sert à protéger initialement le produit de café de l'environnement extérieur, et
une couche barrière mince formée d'EVOH qui délimite ladite couche plastique et qui se trouve à étroite du produit de café torréfié, ladite couche d'EVOH étant d'une épaisseur suffisante pour empêcher substantiellement les ingrédients d'arôme de passer à l'intérieur et donc d'être absorbés par ladite couche en plastique ;
de sorte que les ingrédients d'arôme libérés par le produit de café torréfié soient substantiellement non absorbés par ledit matériau de paroi laminé et au contraire soient encouragés à rester dans le produit de café torréfié, ladite couche D'EVOH étant recouverte d'une couche d'adhérence mince et dans laquelle ladite couche plastique structurelle a une épaisseur comprise entre 762 et 1778 µm (30-70 mils),
dans laquelle ladite couche d'EVOH a une épaisseur comprise entre 7,6 et 50,8 µm (0,3 - 2,0 mils) et dans laquelle ladite couche d'adhérence mince a une épaisseur comprise entre 12,7 et 38,1 µm (0,5 - 1,5 mils).

5. Récipient selon la revendication 4, dans lequel ladite couche d'adhérence mince est en HDPE ayant une épaisseur de 25,4 µm (1 mil).

6. Récipient selon les revendications 4 ou 5, dans lequel ladite couche plastique extérieure est en HDPE.

7. Récipient selon l'une quelconque des revendications 4 à 6, dans lequel ladite couche plastique extérieure est un sandwich de deux couches de polymère ou plus.

8. Récipient selon la revendication 7, dans lequel ladite couche de plastique extérieure est un sandwich de HDPE et d'une résine rebroyée.

9. Procédé de réduction d'une perte d'ingrédients d'arôme de café à partir d'un produit de café torréfié, comprenant les étapes consistant à :
former un corps principal d'un récipient avec une couche en plastique principale qui absorberait autrement une partie des ingrédients d'arôme de café, ladite étape de comprenant l'étape consistant à revêtir l'intérieur de ladite couche de plastique principale avec une couche de matériau barrière formée d'EVOH, de sorte que ladite couche de matériau barrière soit étroitement adjacente au produit de café est empêche substantiellement les ingrédients de l'arôme de café d'être absorbés par le corps principal du récipient ainsi revêtu et de sorte que le corps principal ait une ARE inférieure à 30 % couvrant la couche de matériau barrière avec une couche d'adhérence mince ; et
slocker le produit de café torréfié dans le corps principal,
dans lequel la couche plastique structurelle est formée de façon à avoir une épaisseur comprise entre 762 et 1778 µm (30-70 mils), dans lequel la couche d'EVOH est formée de façon à avoir une épaisseur comprise entre 7,6 et 50,8 µm (0,3 - 2,0 mils) et dans lequel la couche d'adhérence mince est formée de façon à avoir une épaisseur comprise entre 12,7 et 38,1 µm (0,5-1,5 mils).

10. Procédé de réduction d'une perte d'ingrédients d'arôme de café selon la revendication 9, dans lequel le produit de café torréfié est stocké en contact avec la couche d'EVOH.

11. Procédé de réduction d'une perte d'ingrédients d'arôme de café selon la revendication 9 ou 10, dans lequel la couche d'adhérence mince est formée de HDPE de façon à avoir une épaisseur de 25,4 mm (1 mil).

12. Procédé de réduction d'une perte d'ingrédients d'arôme de café selon l'une quelconque des revendications 9 à 11, dans lequel la couche plastique extérieure est formée d'HDPE.

13. Procédé de réduction d'une perte d'ingrédients d'arôme de café selon l'une quelconque des revendications 9 à 12, dans lequel la couche plastique extérieure est formée d'un sandwich de deux couches de polymère ou plus.

14. Procédé de réduction d'une perte d'ingrédients d'arôme de café selon la revendication 13, dans lequel la couche de plastique extérieure est formée d'un sandwich de HDPE et d'une résine rebroyée.
